# EUROPEAN PATENT SPECIFICATION

(11) **EP 3 360 401 B1**
(45) Date of publication and mention of the grant of the patent: **03.07.2019**
(21) Application number: 18151378.9
(22) Date of filing: 12.01.2018
(51) Int. Cl.: A01B 59/06, A01B 69/00

(54) **SIDE-SHIFT ATTACHMENT FOR TRACTOR**
SEITENVERSCHIEBUNGSAUFSATZ FÜR TRAKTOR
FIXATION LATÉRALE POUR TRACTEUR

(30) Priority: 09.02.2017 GB 201702136
(43) Date of publication of application: 15.08.2018
(73) Proprietor: Edwards Farm Machinery Ltd, Tenbury Wells WR15 8HL (GB)
(72) Inventor: Edwards, Robert William, Tenbury Wells, WR15 8HL (GB); Edwards, Richard Ryan, Tenbury Wells, WR15 8HL (GB)
(74) Representative: Doherty, William

(56) References cited:
- WO-A1-2009/067739
- WO-A1-2016/209933
- KR-A- 20120 065 065
- US-A1- 2009 272 551
- US-A1- 2014 245 644

## Description

The present invention relates to a side-shift attachment, particularly but not necessarily exclusively for a tractor. There is also provided a tractor system and towable attachment system which each incorporate the side-shift attachment. A method of stabilising a tractor having a towable attachment is also presented.

Modern agricultural practice is reliant on the use of mechanisation in order to improve the efficiency of field cultivation. Many tasks are performed by towing agricultural machinery from an agricultural tractor, and the machinery is typically attached via a three-point linkage of the tractor.

When towing an attachment, such as a plough or planter, lateral or horizontal force can be imparted to the attachment, which can in turn affect the ability to steer the tractor effectively. Such horizontal movement could, for example, be created by different soil types across the extent of the attachment, or perhaps the presence of an uneven level across the extent, leading to a hill or slope in the field to be cultivated.

In order to make the most effective use of agricultural land, farmers will generally cultivate crops in perfectly straight lines and rows, since this allows crops to be efficiently grown and harvested. The horizontal forces on the towable attachment can significantly hamper the ability to create and utilise parallel rows of crops in a field. One example of a lateral mount for a vehicle mounted implement which aims to counter this effect is provided in US2014/0245644A1.

The present invention seeks to provide an improved method of providing stable control of a towable attachment which is attached to a tractor so limit or obviate the effects of horizontal forces on the towable attachment.

According to a first aspect of the invention, there is provided a side-shift attachment for a tractor, the side-shift attachment comprising: a first mounting member which is engagable with a tractor; a second mounting member which is engagable with a towable attachment for the tractor; actuation means arranged to permit horizontal relative displacement between the first and second mounting members; and at least one ground-penetrating element attached to the first mounting member for limiting lateral movement of the tractor during operation of the actuation means. The at least one ground-penetrating element comprises at least one soil-penetrating disc attached to the first mounting member

A side-shift unit or attachment allows the farmer to easily control the horizontal positioning of the towable attachment which is coupled to the tractor in use in order to maintain straight and/or parallel alignment for cultivation of crops in a field. The provision of the ground-penetrating elements on the tractor-side of the side-shift attachment ensures that lateral forces which may be created at the towable attachment are not replicated in the tractor, and therefore the farmer can concentrate on steering the tractor along the desired trajectory without needing to apply compensation steerage.

Two said soil-penetrating discs may be provided at or adjacent to opposite horizontal ends of the first mounting member.

The provision of one or more soil-penetrating discs ensures that lateral forces at the tractor-end of the side-shift unit are buffered, since the discs are parallel or substantially parallel with the direction of travel of the tractor, whilst also imparting minimal drag on the tractor, as the discs cut neatly into the soil.

The side-shift attachment may further comprise a vertical adjustment means for altering a vertical position of the at least one ground-penetrating element. The vertical adjustment means may comprise a hydraulic actuator.

By permitting the ground penetrating elements to be vertically raised and/or lowered, the farmer can transition between fields without needing to disengage the side-shift attachment. This may be of particular importance, for example, if one or more fields are separated by roads; contact between the ground-penetrating element and a tarmacked road could lead to significant damage to the side-shift attachment.

Preferably, the first mounting member includes a first opening, and the second mounting member includes a second opening, the first and second openings being at least in part overlapping to in use permit a power take-off shaft of an engaged tractor to pass through the side shift attachment.

Optionally, the first opening may extend from an in-use lower edge of the first mounting member and/or the second opening may extend from an in-use lower edge of the second mounting member. Furthermore, the first and second openings may at least in part overlap one another for a full range of horizontal motion provided by the actuation means.

Some towable attachments are driven and/or powered, and the most common mechanism by which drive can be achieved is by coupling to the tractor. Whilst a side-shift attachment could be provided for non-powered attachments, it is preferred that there is a means of accessing the power take-off shaft and/or output of the tractor through the side-shift attachment. Consideration should be provided to the range of relative movement of the first and second mounting members, as the user will not want to allow either member to contact the power take-off shaft in use, as this will result in damage to the shaft and/or side-shift attachment.

In one embodiment, the actuation means may comprise at least one hydraulic actuator, in which case the actuation means may comprise two counter-opposed horizontal said hydraulic actuators. Alternatively, the actuation means may comprise a manually-operable actuator.

The provision of a hydraulic and/or balanced actuator advantageously allows the decoupling of the horizontal motion of the towable attachment and the forwards motion of the tractor. This independence of motion means that the farmer can concentrate on the accuracy of the driving of the tractor, rather than necessary maintaining the alignment of the towable attachment by the steering of the tractor.

The side-shift attachment may further comprise connection means between the first and second mounting members for limiting or preventing vertical displacement of the first and second mounting members without inhibiting horizontal actuation of the second mounting member relative to the first mounting member by the actuation means.

The connection means may comprise at least one connection rod, each of the first and second mounting members including complementary bushings which are engagable with the at least one connection rod.

By allowing preferably slidable coupling between the first and second mounting members, it is possible to ensure that there is no vertical displacement of the mounting members relative to one another, thereby limiting or eliminating the potential for skewed engagement between the tractor and the towable attachment.

There may be further provided an actuator controller associated with the actuation means for controlling the horizontal relative displacement between the first and second mounting members.

The provision of an actuator controller allows for automatic control of the horizontal position of the towable attachment, eliminating the potential for human error. A GPS actuator controller may be particularly effective, as this will permit accurate GPS information to be used to pinpoint the straightness of the lines in which the tractor is driving and therefore using the towable attachment in a given field.

The first mounting member may include a tractor towbar connector, and/or the second mounting member may include a towable attachment connector.

The provision of a coupling mechanism for, preferably releasable, mounting of the side-shift attachment to either a tractor or the towable attachment ensures that a simple modular assembly of the tractor and its various components can be maintained, simplifying both storage and maintenance of the unit.

According to a second aspect of the invention, there is provided a tractor system comprising a tractor having a towbar for towing a towable attachment, and a side-shift attachment in accordance with the first aspect of the invention which is mountable on or at the towbar.

Preferably, the tractor may further comprise a power take-off shaft, the side-shift attachment being receivable over or around the power take-off shaft in-use to permit towing of a drivable towable attachment.

According to a third aspect of the invention, there is provided a towable attachment system comprising a towable attachment for a tractor, and a side-shift attachment in accordance with the first aspect of the invention to which the towable attachment is mountable for towing by a tractor.

According to a fourth aspect of the invention, there is provided a method of stabilising a tractor having a towable attachment, the method comprising the steps of: a] engaging the towable attachment with a second mounting member of a side-shift attachment, preferably in accordance with the first aspect of the invention; b] at least in part inserting the at least one ground-penetrating element into the ground; and c] adjusting the horizontal position of the towable attachment using the side-shift attachment such that the second mounting member moves relative to the first mounting member, the first mounting member being stabilised relative to the ground by the at least one ground-penetrating element.

The provision of a method of stabilising a tractor can advantageously ensure that crops are planted and cultivated in neat straight rows, thereby maximising the efficiency of the cultivation of the crops. This in turn potentially improves the farmer's yields.

According to an aspect not in accordance with the present invention, there is provided a side-shift attachment for a tractor, the side-shift attachment comprising: a first mounting member which is engagable with a tractor; a second mounting member which is engagable with a towable attachment for the tractor; actuation means arranged to permit horizontal relative displacement between the first and second mounting members; and an actuator controller associated with the actuation means for controlling the horizontal relative displacement between the first and second mounting members, the actuator controller being a GPS actuator controller.

The provision of a GPS controlled side-shift attachment allows for, preferably automatic, control of the towable attachment without requiring an operator to continually adjust the relative position of the towable attachment to the tractor. This allows the operator to work in very precise lines across a field without the tractor being skewed off course.

According to an aspect not in accordance with the present invention, there is provided a side-shift attachment for a tractor, the side-shift attachment comprising: a first mounting member which is engagable with a tractor; a second mounting member which is engagable with a towable attachment for the tractor; and actuation means arranged to permit horizontal relative displacement between the first and second mounting members; wherein the first and second mounting members respectively include first and second openings through which a power take-off shaft of an engaged tractor can pass in-use.

Preferably, the first and second openings may at least in part overlap one another for a full range of horizontal motion provided by the actuation means.

Optionally, there may be provided a connection means between the first and second mounting members for limiting or preventing vertical displacement of the first and second mounting members without inhibiting horizontal actuation of the second mounting member relative to the first mounting member by the actuation means.

The provision of a side-shift attachment having receiving openings for a power take-off shaft of a tractor ensures that the horizontal adjustability of a much wider range of towable agricultural attachments can be provided for.

The invention will now be more particularly described, by way of example only, with reference to the accompanying drawings, in which:
Figure 1 shows a side perspective representation of a side-shift attachment in accordance with the first aspect of the invention which is coupled to a tractor and a towable attachment;
Figure 2a shows a front perspective representation of the side-shift attachment of Figure 1, with the ground-penetrating elements omitted for clarity;
Figure 2b shows an exploded representation of the side-shift attachment of Figure 2a, inclusive of the ground-penetrating elements;
Figure 3 shows a plan view of the side-shift attachment of Figure 1; and
Figure 4 shows a side view of the side-shift attachment of Figure 1.

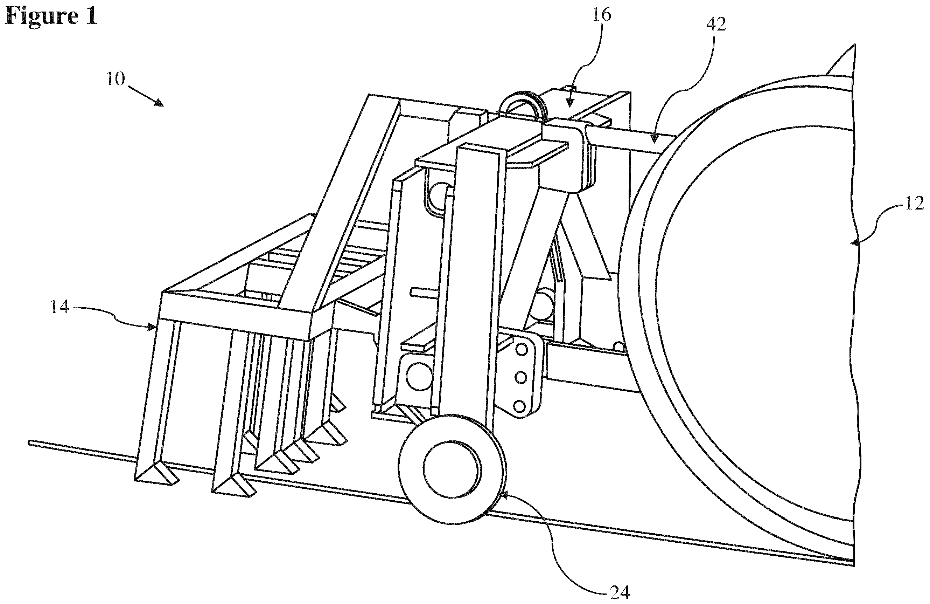

Referring firstly to Figure 1, there is illustrated a tractor and attachment system, indicated globally at 10, in which the tractor 12 is coupled to its towable attachment 14 via a side-shift attachment 16. The towable attachment 14 may be any one of a number of different attachments, such as a seed drill, planter, transplanter, cultivator, hopper, film roller, topper, bed former, or trailer; this is evidently a non-exhaustive list of towable attachments. Furthermore, whilst the side-shift unit 16 is here referred to in combination with a tractor 12, it will be appreciated that it could readily be mountable to a wide array of agricultural machinery, for example, a combine harvester or thresher.

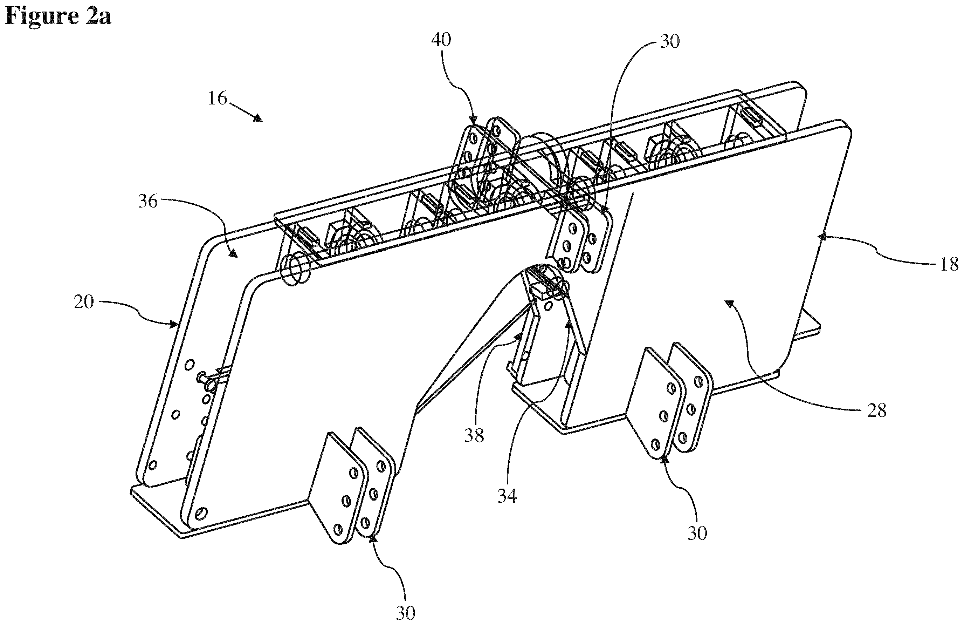

The side-shift attachment 16 is positionable between the tractor 12 and the towable attachment 14 and, as can be seen in Figure 2a, comprises a first mounting member or element 18, a second mounting member, plate or element 20 which is movable relative to the first mounting member 18 in at least an in-use horizontal direction, and an actuation means which is arranged to impart the horizontal displacement between the first and second mounting members 18, 20.

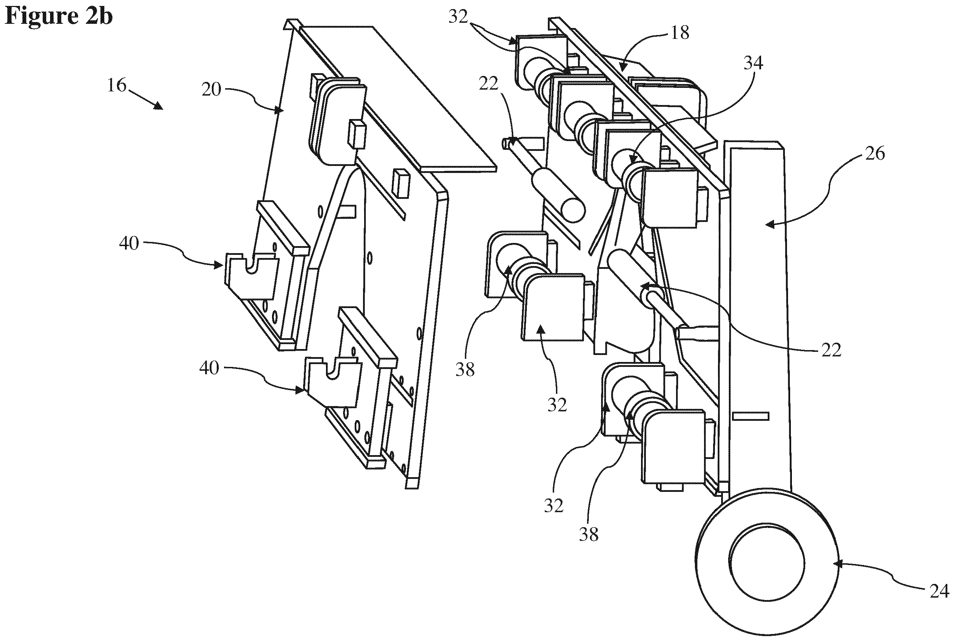

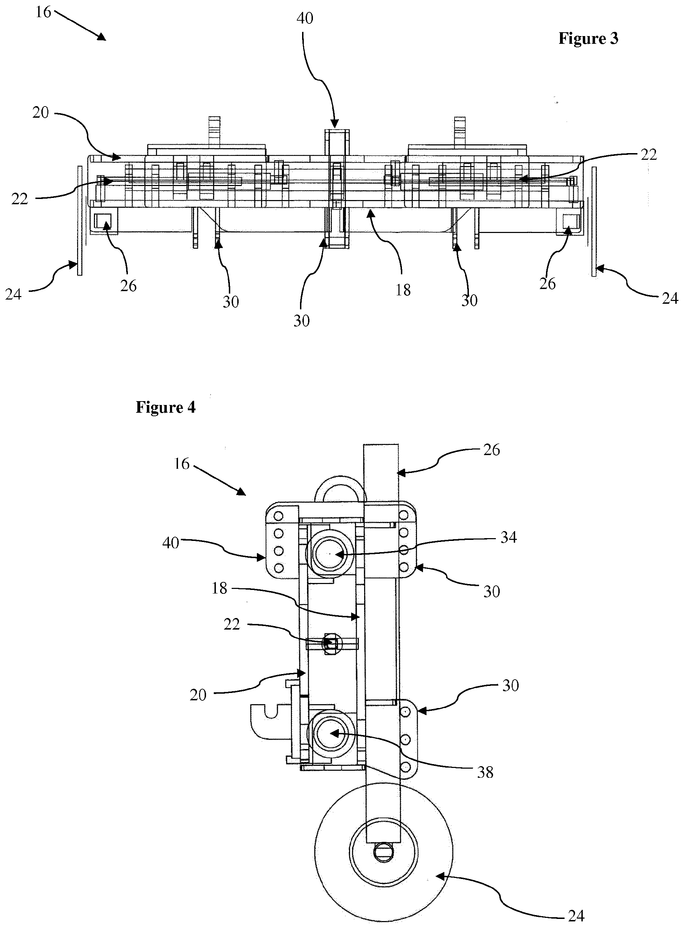

In the present embodiment, as can be seen in Figures 2b and 3, the actuation means here comprises a pair of counter-opposed actuators 22, preferably hydraulic actuators, which are here symmetrically positioned about a central position of the first mounting member 18. It will be appreciated, however, that other actuator arrangements could be provided, for example, a single actuator could control horizontal displacement, or a plurality of actuators could be provided to allow for more precise positional control. Alternatively, manual actuators could be provided, to allow a towable attachment operator to control the position of the second mounting member.

The first mounting member 18 is connected to at least one ground-penetrating element, which here are provided as a pair of soil-penetrating discs 24, rotatably operable about a bearing at a base of a support 26 which extends vertically downward from the first mounting member 18. This can be most readily seen in Figure 4. Other types of ground-penetrating elements could, however, be provided; a single plough could be provided, for example, or a plurality of cutters, discs or ploughs could be provided along at least a majority of a horizontal extent of the first mounting member 18. There may be a balance to be found between minimizing drag on the tractor 12 whilst providing a sufficient stabilisation effect through contact with the ground. In this regard, two spaced apart ground-penetrating elements have been found to be effective. It may be possible, however, to provide a ground-engagement element which does not penetrate the soil, whilst still providing sufficient drag to stabilize the tractor.

In the present embodiment of the invention, the ground-penetrating elements are provided as vertically adjustable elements, being associated with, preferably hydraulic, actuators, although it will be appreciated that other actuators, such as electric or manual actuators, could be provided. This allows the ground-penetrating elements to be raised and/or lowered into the ground to increase or decrease the stabilisation effect conferred by ground penetration.

The first mounting member 18 is preferably formed from a durable material, such as stainless steel, and is formed having a body 28 which is preferably elongate, the longitudinal direction being horizontal in-use. On a front- or tractor-facing side of the first mounting member 18 is preferably provided at least a tractor towbar connector 30 to permit mounting of the side-shift attachment 16 to the tractor 12. This may be provided as one or more hitch points or adaptors for connectors to a towbar of the tractor 12. However, the connector 30 could be separately attached to the side-shift attachment 16 following manufacture, and/or could be provided as a releasable connector to allow for connection of the side-shift attachment 16 to different tractors 12. Preferably, the supports 26 of the ground-penetrating elements are provided on the tractor-facing side of the first mounting member 18; given the presence of the connector 30, this will minimize the overall volume of the side-shift attachment 16, as can be seen from Figure 3.

In this embodiment, on a rear- or towable-attachment-facing side of the first mounting member 18 are provided a plurality of bushings 32, here formed as eyelet rings for receiving a corresponding rod 34.

The first mounting member 18 preferably includes a first opening 34 which preferably extends into the body 28 of the first mounting member 18 from a lower edge thereof. This is sized and shaped so as to be able to receive a power take-off shaft of the tractor 12 therethrough, if applicable. The first opening 34 is here formed as a substantially U-shaped recess in the body 28, though it will be appreciated that any sufficiently sized opening, recess or aperture through which the power take-off shaft can extend could be provided for the first mounting member 18.

The body 28 of the first mounting member 18 may be or substantially be planar, having a major or outer surface which in-use faces the tractor 12. The body 28 may be provided so as to have one or more reinforcing portions to rigidify the major surface, ensuring that the body 28 can be robustly attached to the tractor 12 during use. The bushings 32 may be provided on an opposite, inner major surface of the body 28, which is in-use facing towards the second mounting member 20, that is, towards the inside of the side-shift attachment 16.

The second mounting member 20 is formed so as to be complementarily engagable with the first mounting member 18. The second mounting member 20 has a body 36 which is preferably elongate, the longitudinal direction being horizontal in-use, and which is preferably formed from a durable material, such as stainless steel. On a front- or tractor-facing side of the second mounting member 20 are a corresponding plurality of bushings 32, here formed as eyelet rings for receiving a corresponding rod 34.

The second mounting member 20 preferably includes a second opening 38 which preferably extends into the body 36 of the second mounting member 20 from a lower edge thereof. Again, this is sized and shaped so as to be able to receive a power take-off shaft of the tractor 12 therethrough; however, given the relative movement of the second mounting member 20 relative to the first mounting member 18, the second opening 38 may be provided so as to be larger than the first opening 34. In the present side-shift attachment 16, both first and second openings 34, 38 are sized to be identical, and the size of the first and second openings 34, 38 is such that even at full horizontal extension of the second mounting member 20 via the hydraulic actuators 22, in either direction, the second opening 38 is sufficiently wide so as to not contact or collide with a power take-off shaft of an attached tractor 12.

The body 36 of the second mounting member 20 may also be formed so as to have a major outer surface, which in-use faces the towable attachment 14. Similarly to that of the first mounting member 18, the body 36 may be formed with one or more reinforcing portions, and the bushings 32 may be provided on the inner major surface of the body 36. When assembled, the major inner surfaces of the bodies 28, 36 of the first and second mounting members 18, 20 should be co-planar or substantially co-planar, and facing one another. The relative horizontal motion of the first and second mounting members 18, 20 occurs in parallel to a co-plane of the major inner surfaces.

The bushings 32 of the first and second mounting members 18, 20 positioned so as to positionally alternate. In the depicted embodiment, there are three bushings 32, two on either end of a top edge of the front mounting member 18, and one in the middle of the top edge of the front mounting member 18, with corresponding bushings 32 on the second mounting member 20 which are interposable between the bushings 32 of the first mounting member 18 when assembled. The elongate rod 34, preferably formed as a chrome rod, can be inserted through each of the bushings 32 along at least a majority of the longitudinal extents of the first and second mounting members 18, 20. This rod 34, via the bushings 32, thereby prevent or limit relative vertical displacement of the first and second mounting members 18, 20 to one another, once locked in position.

Similarly, there may be bushings 32 provided at a lower end of either side of the respective first and second openings 34, 38 on either of the first and second mounting members 18, 20, and smaller rods 38 may be provided which can prevent or limit relative vertical displacement of the lower ends of the first and second mounting members 18, 20.

On a rear- or towable-attachment-facing side of the second mounting member 20 there may preferably be provided a towable-attachment connector 40, and the form of the towable-attachment connector 40 may be dependent upon the towable attachment and the connectors available thereon. Adaptor members may therefore be preferable to dedicated and/or bespoke connectors on the second mounting member 20 in order that a plurality of different types of towable attachment 14 may be engaged with the side-shift attachment 16.

Associated with the actuation means may be provided an actuator controller 42, which may be a wired or wireless controller. This allows for at least the horizontal position of the side-shift attachment 16 to be controlled, either automatically, or manually from the cabin of the tractor 12. In one possible embodiment, the actuator controller 42 may be a GPS actuator controller, there being a processor engaged with the GPS actuator controller so as to automatically adjust the horizontal position to ensure that the position of the towable attachment 14 is correct at all times.

In use, the side-shift attachment 16 is mounted to both the tractor 12 and to the towable attachment 14 such that, when the side-shift attachment is operated whilst the tractor 12 is in motion, a change in at least the horizontal or lateral position of the towable attachment 14 relative to the tractor 12 is effected.

Preferably, the relative motion between the first and second mounting members 18, 20 is in parallel to a co-plane of the body 28, 36 of each, which are parallel to one another. The relative motion is then perpendicular or substantially perpendicular to a direction of motion of the tractor 12, thereby creating a nominal horizontal displacement at the towable attachment 14.

The pair of soil-penetrating discs 24 can be lowered into the soil in order to provide a buffer to lateral or horizontal jerk which is fixed relative to the first mounting member 18 and to the tractor 12. This ensures that when an actuation is created by the actuators 22 of the actuation means, the motion is relative to the first mounting member 18 and is thus transmitted via the second mounting member 20 to the towable attachment 14. The engagement of the soil-penetrating discs 22 with the ground means that, for example, if the towable attachment 14 were relatively heavy or lodged in the soil, that there would be a considerably lower probability of the tractor 12 being displaced relative to the towable attachment 14, rather than the reverse, which is what is intended.

It will be appreciated that whilst the ground-penetrating elements of the present invention assist in preventing the displacement of the tractor in use, it is possible to provide a side-shift attachment in which no ground-penetrating elements are provided. This would still allow for the horizontal control of the towable attachment by a tractor in order to allow the driver to concentrate on driving in straight parallel lines in the field.

In particular, this may be of particular use where a GPS actuator controller is provided, thereby allowing the side-shift attachment to be controlled independently of the driver of the tractor, ensuring that there is automatic left/right control of the towable attachment without human intervention.

Similarly, the openings for the power take-off shaft in the side-shift attachment could also be provided independently of either the ground-penetrating elements or the GPS actuator controller, since this would conceivably allow the user to mount the side-shift attachment onto an existing tractor arrangement with, for example, manual control of the left/right horizontal position of the towable attachment.

It is therefore possible to provide a side-shift attachment for a tractor which allows for at least horizontal movement of an attached towable attachment whilst limiting the propensity for reverse swinging of the tractor by the towable attachment. This allows for precise control of a towable attachment for a tractor, ensuring the most efficient use of space in agricultural land.

The words 'comprises/comprising' and the words 'having/including' when used herein with reference to the present invention are used to specify the presence of stated features, integers, steps or components, but do not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

The embodiments described above are provided by way of examples only, and various other modifications will be apparent to persons skilled in the field without departing from the scope of the invention as defined herein.

## Claims

1. A side-shift attachment (16) for a tractor (12), the side-shift attachment (16) comprising:
a first mounting member (18) which is engagable with a tractor (12);
a second mounting member (20) which is engagable with a towable attachment (14) for the tractor (12);
actuation means arranged to permit horizontal relative displacement between the first and second mounting members (18, 20); and
at least one ground-penetrating element attached to the first mounting member (18) for limiting lateral movement of the tractor (12) during operation of the actuation means,
**characterized in that** the at least one ground-penetrating element comprises at least one soil-penetrating disc (24) attached to the first mounting member (18).

2. A side-shift attachment (16) as claimed in claim 1, wherein two said soil-penetrating discs (24) are provided at or adjacent to opposite horizontal ends of the first mounting member (18).

3. A side-shift attachment (16) as claimed in claim 1 or claim 2, further comprising a vertical adjustment means for altering a vertical position of the at least one ground-penetrating element.

4. A side-shift attachment (16) as claimed in claim 3, wherein the vertical adjustment means comprises a hydraulic actuator.

5. A side-shift attachment (16) as claimed in any one of the preceding claims, wherein the first mounting member (18) includes a first opening (34), and the second mounting member (20) includes a second opening (38), the first and second openings (34, 38) being at least in part overlapping to in use permit a power take-off shaft of an engaged tractor (12) to pass through the side shift attachment (16).

6. A side-shift attachment (16) as claimed in claim 5, wherein the first opening (34) extends from an in-use lower edge of the first mounting member (18).

7. A side shift attachment (16) as claimed in claim 5 or claim 6, wherein the second opening (38) extends from an in-use lower edge of the second mounting member (20).

8. A side-shift attachment (16) as claimed in any one of claims 5 to 7, wherein the first and second openings (18, 20) at least in part overlap one another for a full range of horizontal motion provided by the actuation means.

9. A side-shift attachment (16) as claimed in any one of the preceding claims, wherein the actuation means comprises at least one hydraulic actuator (22).

10. A side-shift attachment (16) as claimed in any one of the preceding claims, further comprising connection means between the first and second mounting members (18, 20) for limiting or preventing vertical displacement of the first and second mounting members (18, 20) without inhibiting horizontal actuation of the second mounting member (20) relative to the first mounting member (18) by the actuation means.

11. A side-shift attachment (16) as claimed claim 10, wherein the connection means comprises at least one connection rod (34), each of the first and second mounting members (18, 20) including complementary bushings (32) which are engagable with the at least one connection rod (34).

12. A side-shift attachment (16) as claimed in any one of the preceding claims, further comprising an actuator controller (42) associated with the actuation means for controlling the horizontal relative displacement between the first and second mounting members (18, 20).

13. A tractor system comprising a tractor (12) having a towbar for towing a towable attachment (14), and a side-shift attachment (16) as claimed in any one of the preceding claims which is mountable on or at the towbar.

14. A towable attachment system comprising a towable attachment for a tractor (12), and a side-shift attachment (16) as claimed in any one of claims 1 to 12 to which the towable attachment (14) is mountable for towing by a tractor (12).

15. A method of stabilising a tractor (12) having a towable attachment (14), the method comprising the steps of:
a] engaging the towable attachment (14) with a second mounting member of a side-shift attachment (16) as claimed in any one of claims 1 to 12;
b] at least in part inserting the at least one ground-penetrating element into the ground; and
c] adjusting the horizontal position of the towable attachment (14) using the side-shift attachment such that the second mounting member moves relative to the first mounting member, the first mounting member being stabilised relative to the ground by the at least one ground-penetrating element.

## Patentansprüche

1. Seitenverschiebungs-Anbauelement (16) für einen Traktor (12), wobei das Seitenbewegungs-Anbauelement (16), Folgendes umfasst:
ein erstes Befestigungselement (18), das mit einem Traktor (12) in Eingriff bringbar ist;
ein zweites Befestigungselement (20), das mit einem schleppbaren Anbauelement (14) für den Traktor (12) in Eingriff bringbar ist;
Betätigungsmittel, angeordnet, um eine horizontale Relativverschiebung zwischen dem ersten und dem zweiten Befestigungselement (18, 20) zu ermöglichen; und
mindestens ein Bodendurchdringungselement, das an dem ersten Befestigungselement (18) angebracht ist, um die seitliche Bewegung des Traktors (12) während des Betriebs des Betätigungsmittels zu begrenzen, **dadurch gekennzeichnet, dass** das mindestens eine Bodendurchdringungselement mindestens eine Bodendurchdringungsscheibe (24) umfasst, die an dem ersten Befestigungselement (18) angebracht ist.

2. Seitenverschiebungs-Anbauelement (16) nach Anspruch 1, wobei zwei Bodendurchdringungsscheiben (24) an oder neben einander gegenüberliegenden horizontalen Enden des ersten Befestigungselements (18) bereitgestellt sind.

3. Seitenverschiebungs-Anbauelement (16) nach Anspruch 1 oder 2, ferner umfassend ein vertikales Einstellmittel zum Ändern einer vertikalen Position des mindestens einen Bodendurchdringungselements.

4. Seitenverschiebungs-Anbauelement (16) nach Anspruch 3, wobei das vertikale Einstellmittel einen hydraulischen Aktuator umfasst.

5. Seitenverschiebungs-Anbauelement (16) nach einem der vorhergehenden Ansprüche, wobei das erste Befestigungselement (18) eine erste Öffnung (34) aufweist und das zweite Befestigungselement (20) eine zweite Öffnung (38) aufweist, wobei die erste und die zweite Öffnung (34, 38) sich zumindest teilweise überlappen, um im Gebrauch zu ermöglichen, dass ein Nebenantrieb eines Traktors (12) im Eingriff durch das Seitenverschiebungs-Anbauelement (16) hindurchgeht.

6. Seitenverschiebungs-Anbauelement (16) nach Anspruch 5, wobei sich die erste Öffnung (34) von einer in Gebrauch befindlichen Unterkante des ersten Befestigungselements (18) aus erstreckt.

7. Seitenverschiebungs-Anbauelement (16) nach Anspruch 5 oder 6, wobei sich die zweite Öffnung (38) von einer im Gebrauch unteren Kante des zweiten Befestigungselements (20) aus erstreckt.

8. Seitenverschiebungs-Anbauelement (16) nach einem der Ansprüche 5 bis 7, wobei die erste und die zweite Öffnung (18, 20) sich zumindest teilweise überlappen, um einen vollen Bereich horizontaler Bewegung zu ermöglichen, der durch die Betätigungsmittel vorgesehen ist.

9. Seitenverschiebungs-Anbauelement (16) nach einem der vorhergehenden Ansprüche, wobei das Betätigungsmittel mindestens einen hydraulischen Aktuator (22) umfasst.

10. Seitenverschiebungs-Anbauelement (16) nach einem der vorhergehenden Ansprüche, ferner Verbindungsmittel zwischen dem ersten und dem zweiten Befestigungselement (18, 20) umfassend, zum Begrenzen oder Verhindern einer vertikalen Verschiebung des ersten und des zweiten Befestigungselements (18, 20), ohne eine horizontale Betätigung des zweiten Befestigungselements (20) relativ zu dem ersten Befestigungselement (18) durch das Betätigungsmittel zu verhindern.

11. Seitenverschiebungs-Anbauelement (16) nach Anspruch 10, wobei das Verbindungsmittel mindestens eine Verbindungsstange (34) umfasst, wobei das erste und das zweite Befestigungselement (18, 20) komplementäre Buchsen (32) aufweisen, die mit der mindestens einen Verbindungsstange (34) in Eingriff bringbar sind.

12. Seitenverschiebungs-Anbauelement (16) nach einem der vorhergehenden Ansprüche, ferner eine Aktuatorsteuerung (42) umfassend, die dem Betätigungsmittel zum Steuern der horizontalen Relativverschiebung zwischen dem ersten und dem zweiten Befestigungselement (18, 20) zugeordnet ist.

13. Traktorsystem, umfassend einen Traktor (12) mit einer Anhängerkupplung zum Schleppen eines schleppbaren Anbauelements (14) und einem Seitenverschiebungs-Anbauelement (16) nach einem der vorhergehenden Ansprüche, auf oder an der Anhängerkupplung anbringbar.

14. Schleppbares Anbausystem, umfassend ein schleppbares Anbauelement für einen Traktor (12) und ein Seitenverschiebungs-Anbauelement (16) nach einem der Ansprüche 1 bis 12, an dem das schleppbare Anbauelement (14) zum Schleppen durch einen Traktor (12) anbringbar ist.

15. Verfahren zum Herstellen eines Traktors (12) mit einem schleppbaren Anbauelement (14), wobei das Verfahren die folgenden Schritte umfasst:
a] Ineingriffbringen des schleppbaren Anbauelements (14) mit einem zweiten Befestigungselement eines Seitenverschiebungs-Anbauelements (16) nach einem der Ansprüche 1 bis 12;
b] mindestens teilweises Einsetzen des mindestens einen Bodendurchdringungselements in den Boden; und
c] Einstellen der horizontalen Position des Anhängers (14) unter Verwendung des Seitenverschiebungs-Anbauelements derart, dass sich das zweite Befestigungselement relativ zu dem ersten Befestigungselement bewegt, wobei das erste Befestigungselement relativ zum Boden durch das mindestens eine Bodendurchdringungselement stabilisiert ist.

## Revendications

1. Accessoire à déplacement latéral (16) destiné à un tracteur (12), l'accessoire à déplacement latéral (16) comprenant :
un premier élément de montage (18) pouvant venir en prise avec un tracteur (12) ;
un second élément de montage (20) pouvant venir en prise avec un accessoire remorquable (14) destiné au tracteur (12) ;
des moyens d'actionnement disposés pour permettre un déplacement relatif horizontal entre les premier et second éléments de montage (18, 20) ; et
au moins un élément pénétrant dans le sol fixé au premier élément de montage (18) pour limiter le mouvement latéral du tracteur (12) pendant le fonctionnement des moyens d'actionnement, **caractérisé en ce que** ledit au moins un élément pénétrant dans le sol comprend au moins un disque pénétrant dans le sol (24) fixé au premier élément de montage (18).

2. Accessoire à déplacement latéral (16) selon la revendication 1, dans lequel deux desdits disques pénétrant dans le sol (24) sont prévus au niveau des extrémités horizontales opposées du premier élément de montage (18) ou sont adjacents aux extrémités horizontales opposées du premier élément de montage.

3. Accessoire à déplacement latéral (16) selon la revendication 1 ou 2, comprenant en outre un moyen de réglage vertical permettant de modifier une position verticale dudit au moins un élément pénétrant dans le sol.

4. Accessoire à déplacement latéral (16) selon la revendication 3, dans lequel le moyen de réglage vertical comprend un actionneur hydraulique.

5. Accessoire à déplacement latéral (16) selon l'une quelconque des revendications précédentes, dans lequel le premier élément de montage (18) comprend une première ouverture (34) et le second élément de montage (20) comprend une seconde ouverture (38), les première et seconde ouvertures (34, 38) se chevauchant au moins partiellement pour permettre à un arbre de prise de force d'un tracteur en prise (12) de passer à travers l'accessoire à déplacement latéral (16) lors de l'utilisation.

6. Accessoire à déplacement latéral (16) selon la revendication 5, dans lequel la première ouverture (34) s'étend à partir d'un bord inférieur utilisé du premier élément de montage (18).

7. Accessoire à déplacement latéral (16) selon la revendication 5 ou 6, dans lequel la seconde ouverture (38) s'étend à partir d'un bord inférieur utilisé du second élément de montage (20).

8. Accessoire à déplacement latéral (16) selon l'une quelconque des revendications 5 à 7, dans lequel les première et seconde ouvertures (18, 20) se chevauchent au moins partiellement pour une plage complète de mouvements horizontaux fournis par les moyens d'actionnement.

9. Accessoire à déplacement latéral (16) selon l'une quelconque des revendications précédentes, dans lequel le moyen d'actionnement comprend au moins un actionneur hydraulique (22).

10. Accessoire à déplacement latéral (16) selon l'une quelconque des revendications précédentes, comprenant en outre un moyen de connexion entre les premier et second éléments de montage (18, 20) pour limiter ou empêcher le déplacement vertical des premier et second éléments de montage (18, 20), sans empêcher l'actionnement horizontal du second élément de montage (20) par rapport au premier élément de montage (18) par le moyen d'actionnement.

11. Accessoire à déplacement latéral (16) selon la revendication 10, dans lequel le moyen de connexion comprend au moins une tige de connexion (34), chacun des premier et second éléments de montage (18, 20) comprenant des douilles complémentaires (32) pouvant venir en prise avec au moins une tige de connexion (34).

12. Accessoire à déplacement latéral (16) selon l'une quelconque des revendications précédentes, comprenant en outre une commande d'actionneur (42) associée aux moyens d'actionnement pour commander le déplacement relatif horizontal entre les premier et second éléments de montage (18, 20).

13. Système de tracteur comprenant un tracteur (12) doté d'une barre de remorquage permettant de remorquer un accessoire remorquable (14) et un accessoire à déplacement latéral (16) selon l'une quelconque des revendications précédentes, pouvant être monté sur la barre de remorquage ou au niveau de celle-ci.

14. Système d'accessoire remorquable comprenant un accessoire remorquable destiné à un tracteur (12) et un accessoire à déplacement latéral (16) selon l'une quelconque des revendications 1 à 12, sur lequel l'accessoire remorquable (14) peut être monté pour le remorquage par un tracteur (12).

15. Procédé de stabilisation d'un tracteur (12) comportant un accessoire remorquable (14), le procédé comprenant les étapes :
a] de mise en prise de l'accessoire remorquable (14) avec un second élément de montage d'un accessoire à déplacement latéral (16) selon l'une quelconque des revendications 1 à 12 ;
b] d'insertion au moins partielle dudit au moins un élément pénétrant dans le sol ; et
c] de réglage de la position horizontale de l'accessoire remorquable (14) à l'aide de l'accessoire à déplacement latéral, de sorte que le second élément de montage se déplace par rapport au premier élément de montage, le premier élément de montage étant stabilisé par rapport au sol par ledit au moins un élément pénétrant dans le sol.
